# EUROPEAN PATENT APPLICATION

(11) **EP 1 282 347 A1**
(43) Date of publication of application: **05.02.2003**
(21) Application number: 01410096.0
(22) Date of filing: 03.08.2001
(51) Int. Cl.: H05K 7/14

(54) **A housing for a computer sub-assembly comprising a keeper and a support member**

(71) Applicant: Hewlett-Packard Company, A Delaware Corporation, Palo Alto, CA 94304 (US)
(72) Inventor: LeLong, Stephane, 38410 Vaulnaveys le Haut (FR); Rieuvernet, Pierre, 38330 Montbonnot St Martin (FR)
(74) Representative: Lloyd, Richard Graham

(57) **Abstract**

A housing for a computer sub-assembly having a releasable keeper operative to retain the sub-assembly in position within the housing.

A housing for a computer sub-assembly having a keeper operative to retain the sub-assembly in position within the housing, the keeper being releasable, whereby it may be released from the sub-assembly using a substantially single-finger operation.

A housing for a computer sub-assembly having a channel for location of sub-assembly support member, the housing having an engagement element which, when the support member is inserted correctly into the housing, co-operates with a locator element on the support member, such co-operation not being possible when the support member is inserted incorrectly.

A support member for use within a housing of a computer sub-assembly, the support member having a shock absorber wich, in use, bears upon the housing, such that the magnitude of a shock to which the housing is subjected is reduced prior to it being transmitted to the sub-assembly to which the support member is attached.

## Description

### Background to and Field of the Invention

This invention relates to a housing for a computer sub-assembly, a keeper for use with a housing for a computer sub-assembly and a support member for a computer sub-assembly.

More specifically, although by no means exclusively, the invention relates to computer sub-assembly housings such as cages which, as is well known, are used to house a variety of internal components such as drive units. Cages of this type not only need to be robust, so as to protect the sensitive components of the drive units concerned, but must also be designed so as to allow the drive units to be located securely within them, and for the effect, on the drive units, of any external shock to the computer's chassis, to be minimised. Other factors influencing the design of such housings are the ease with which drive units (such as Hard Disk Drives - HDD's) can be inserted therein, and the manner, therefore, in which associated support members (such as drive unit rails or trays) are attached thereto.

It is an object of the present invention to provide a housing for a computer sub-assembly such as a drive unit that overcomes or at least reduces the drawbacks experienced with prior art constructions. It is also an object of the present invention to provide an improved keeper and a support member for use with such a housing.

### Summary of the Invention

In accordance with a first aspect of the present invention, there is provided a housing for a computer sub-assembly having a releasable keeper operative to retain the sub-assembly in position within the housing.

The keeper may be provided with a resilient biasing element operative to urge the sub-assembly towards the position.

Preferably, at least two resilient biasing elements are provided, whereby the sub-assembly may be so urged in at least two different dimensions.

In this way, the sub-assembly may be urged towards the housing in a direction generally parallel with the principal longitudinal axis thereof and also towards a side wall of the housing, in a direction generally transverse to said axis.

The keeper may have a body, with the or each resilient biasing element preferably being integral therewith.

The or each resilient biasing element may comprise a leaf spring.

The or each resilient biasing element may be adapted to bear against a sub-assembly support member, such as a drive unit rail or tray.

The keeper preferably is mounted within the computer in a manner whereby angular movement of the keeper, relative to the housing, is permitted.

The keeper may be mounted for pivotal movement relative to the housing.

Preferably, a distal part of the keeper is provided with a releasable attachment element co-operable with an attachment formation associated with the housing.

The releasable attachment element may be resilient, deformation thereof being required to release the element from the attachment formation of the housing.

Preferably, the keeper is permanently pivotally attached to the housing.

The releasable attachment element may comprise a protrusion adapted to co-operate with an aperture or recess provided within or as part of the housing. The resilient attachment element and the attachment formation may be co-operable in a snap-fitting manner.

Preferably, the releasable attachment element is integral with the body of the keeper.

The keeper may be provided with a release member such as a lever, whereby a user may release the keeper from the housing, thus allowing insertion, withdrawal or adjustment of the sub-assembly.

Preferably, the release member allows the keeper to be released, by a user, using a single-finger operation.

Conveniently, the keeper is a one-piece component.

In accordance with a second aspect of the present invention, there is provided a housing for a computer sub-assembly having a keeper operative to retain the sub-assembly in position within the housing, wherein the keeper may be released from the sub-assembly using a substantially single-finger operation.

The keeper, in accordance with the second aspect of the present invention, may comprise one or more of the features described in relation to the first aspect of the present invention.

In accordance with a third aspect of the present invention, there is provided a housing for a computer sub-assembly having an attachment facility, whereby a sub-assembly support member may be attached to the housing in the absence of the sub-assembly itself.

The attachment facility may comprise a retaining element co-operable with an engagement part of the support member.

The retaining element preferably comprises a projection attached to or integral with the housing.

The engagement part may be co-operable with the retaining element in a face-to-face manner, whereby movement of the support member away from the housing, in at least one direction, is hindered.

The retaining element and the engagement part may comprise mutually co-operable tabs. The tabs may be substantially L-shaped, and may be co-operable by virtue of a sliding engagement.

The housing may be provided with a guide channel for location of the support member, the guide channel narrowing towards at least one end thereof, whereby movement of the suppout member therealong is hindered.

Preferably, the housing has a front side, through which the sub-assembly is introduced, and wherein the channel narrows towards said front side. The narrowing part may provide a shoulder formation, the shoulder formation and/or support member being resiliently deformable whereby the support member may be introduced to the channel in a snap-fitting manner.

In accordance with a fourth aspect of the present invention, there is provided a housing for a computer sub-assembly having a channel for location of a sub-assembly support member, the housing having an engagement element which, when the support member is inserted correctly into the housing, cooperates with a locator element on the support member, such co-operation not being possible when the support member is inserted incorrectly.

The engagement element may comprise a recess or aperture and the locator element may comprise a protrusion. Conveniently, the engagement element comprises a slot and the locator element is provided by a tongue.

In accordance with a fifth aspect of the present invention, there is provided a support member for a computer sub-assembly having an engagement part arranged so as to allow the support member to be attached to a computer sub-assembly housing in the absence of the sub-assembly itself.

The engagement part may comprise a projection extending away from the support member, the projection being engageable with a co-operating retaining element associated with the housing.

The engagement part may be integral with the support member.

The engagement part and retaining element may be slidably engageable with each other. Preferably, the engagement part and retaining element, when engaged, adopt a substantially face-to-face arrangement. The engagement part and retaining element may comprise mutually co-operable tabs, which conveniently are substantially L-shaped.

The support member may comprise a generally planar body and the engagement part may be upstanding therefrom.

In accordance with a sixth aspect of the present invention, there is provided a support member for use within a housing of a computer sub-assembly, the support member having a shock absorber which, in use, bears upon the housing, such that the magnitude of any shock to which the housing is subjected is reduced prior to it being transmitted to the sub-assembly to which the support member is attached.

The shock absorber preferably is resiliently deformable, and conveniently is integral with the support member. The shock absorber may be provided by a leaf spring, a distal end of which may be provided with a projecting contact which, in use, bears upon the housing.

In this way, the frictional force exerted by the housing and support member on each other is increased. As will be appreciated, this also assists in reducing the rate at which the support member can be introduced to the housing, thus, in turn, reducing the risk of any violent shocks being imparted to the sub-assembly as the support member reaches the end of its travel, and thus comes to abut a stop provided by the housing.

The projection may be engageable within a receiving formation, such as a recess, provided in the housing.

Conveniently, at least four shock absorbers are provided.

In accordance with a seventh aspect of the present invention, there is provided a support member for use within a housing of a computer sub-assembly, the support member having a locator element which, when the support member is incorrectly introduced into the housing, abuts a stop element associated with the housing, thus preventing complete insertion of the support member.

The locator element may comprise a projection and the stop element may be provided by a front part of the housing.

The stop element may be provided in a front face of the housing. An engagement element may also be provided, positioned and/or dimensioned so as to receive the locator element when the support member is correctly inserted, thereby allowing complete insertion of the support member.

The stop element may comprise a tongue and the engagement element may comprise a slot.

A secondary locator element may be provided, the secondary locator element extending transversely of the longitudinal axis of the support member so as to hinder insertion of a left-hand support member into a right-hand guide channel and vice versa.

In accordance with an eighth aspect of the present invention, there is provided a housing for a computer sub-assembly and a support member for use therewith, a shock absorber being disposed between the housing and sub-assembly, whereby the magnitude of any shock to which the housing is subjected is reduced, prior to it being transmitted to the sub-assembly.

The shock absorber preferably is disposed between the housing and the support member.

The invention will now be described in greater detail, but strictly by way of example only, by reference to the accompanying drawings, of which:

### Brief Description of the Drawings

Figure 1 is a perspective view, from below, one side, and the front, of a hard disk drive cage;
Figure 2 is a somewhat similar view of the cage of Figure 1, but with one keeper removed, for clarity;
Figure 3 shows one embodiment of support member in accordance with the invention;
Figure 4 shows a further embodiment of support member;
Figure 5 is a perspective view, from the rear, one side and below, of the cage of Figure 1;
Figure 6 is a close-up perspective view of the keeper of Figure 1, shown in an open position;
Figure 7 is a close-up view of a similar keeper, shown in a closed position;
Figure 8 is a perspective view of a HDD rail, showing the leaf springs formed therein;
Figure 9 shows one end of the rail of Figure 8, in close-up and
Figure 10 shows two slightly differing embodiments of rails attached to the inside of a hard disk drive cage.

### Detailed Description of the Drawings and Best Mode.

Referring to the Figures, these show a computer sub-assembly housing in the form of a hard disk drive (HDD) cage 10 having a somewhat box-like configuration. As is conventional, the cage 10 has an open front side through which may be introduced a variety of computer sub-units such as HDD's, CD ROM drives and floppy drives. Two HDD's are shown in somewhat schematic form at 11 and 12. The cage 10 is provided, on each side, with two sets of guide channels 13, each defined by opposing runners 14 interconnected by a number (in this case two) of webs 15. The guide channels serve, in use, to receive sub-assembly support members such as HDD rails 16 and 17 which are attached, in generally conventional manner, to the HDD's 11 and 12 respectively. In order to minimise any transmission of vibrations between the HDD 12 and the cage 10, a grommet 18 is provided between the two, with a connecting screw (not shown) passing through the grommet to the HDD 12, again in somewhat conventional manner, in order to allow electrical contact to be made between the cage and the HDD, to reduce the possibility of any EMI (electro-magnetic interference) occurring. In contrast, the HDD rail 16 is provided with a slightly recessed area 20, conveniently formed by pressing or otherwise deforming the generally planar structure of the rail concerned. As will be appreciated, this recession has the effect of increasing (locally) the effective width of the rail, which takes the place of the grommet 18 used to attach the lower HDD rail 17, and it will thus be seen that the cage 10 is able to accommodate HDD's adapted for rail attachment with or without the use of vibration absorbing grommets.

The cage 10 is provided with opposing keepers 21 and 22, the purpose of which is to retain the HDD sub-assemblies in position within the cage 10.

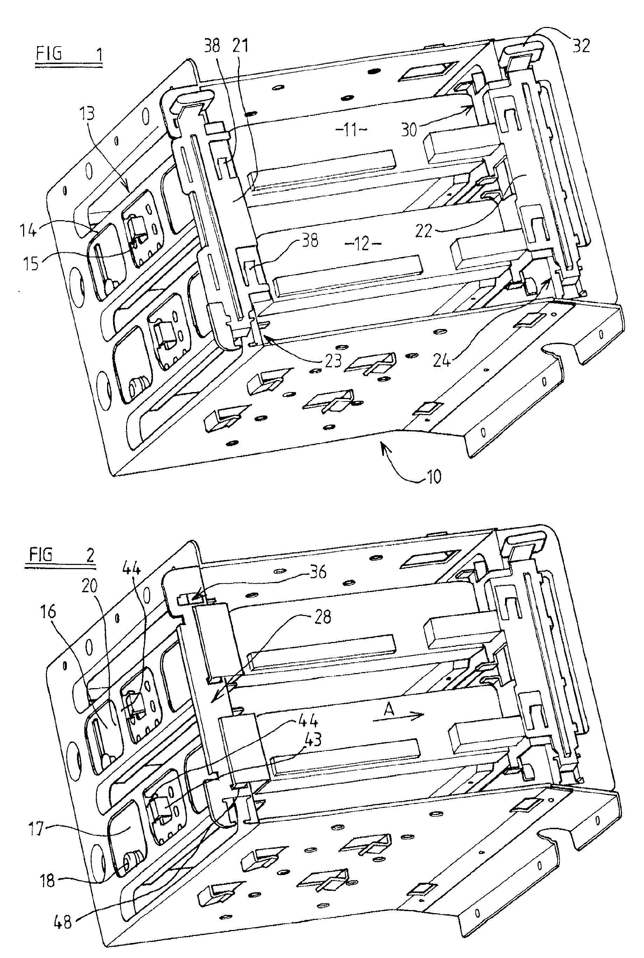

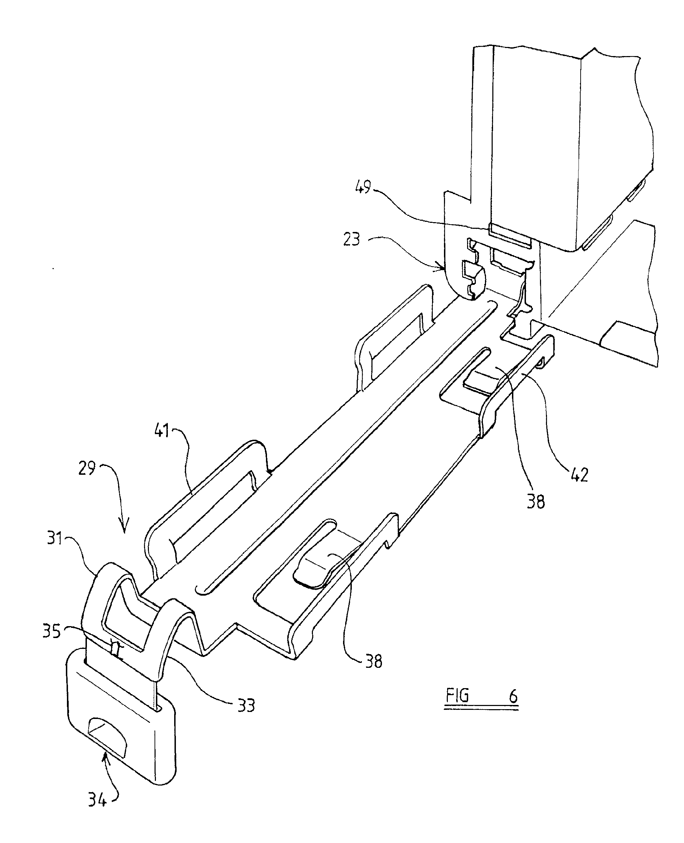

The keepers 21 and 22 are generally planar in nature, and may thus be formed, initially, as a metal pressing or the like. As can be seen, proximal ends 23 and 24 of the keepers are engaged with lower parts of the cage 10 in a pivotal manner, whereby the keepers may move from the closed positions shown in Figure 1 to the open position shown in Figure 6. As illustrated in more detail in Figure 5, the keeper 21 is provided, at its proximal end 23, with a pivot pin 25 which is received within a cradle 26, with the pivot pin 25 - and hence the entire keeper 21 - being releasable from the cage 10 by appropriate movement of the pin 25 out of the cradle 26 and through an access slot 27 provided in the front wall 28 of the cage. It may be preferred that the keepers are permanently and pivotally secured to the housing. In such a situation a suitable permanent attachment would be used between the pivot end of the keeper and the housing.

Distal ends 29 and 30 of the keepers are provided with releasable attachment elements 31 and 32 which are formed integrally with the body of the keepers by an appropriate bending/pressing operation, leading to a somewhat folded construction, whereby the distal ends protrude generally transversely away from the principal longitudinal axes of the keepers. As shown in more detail in Figure 5, the attachment element 31 comprises a spring clip 33 having a user engageable lever 34 which, in the examples shown, is provided with a plastics covering, to facilitate manual engagement thereof, and to conceal any sharp edges which may be present. It will of course be appreciated that the releasable attachment element 32 is somewhat similar in configuration.

The spring clips are each provided, on their upper surfaces, with a protrusion or bump 35 which is effective to hinder (although not prevent) insertion of the clip within apertures 36 and 37 provided in the front wall 28 of the cage. In order to close the keepers, compression of the spring clips in a generally downwards direction is required, the compression being effective to lower the bumps 35 in relation to the apertures 36 and 37, thus allowing passage therethrough of most of the spring clip construction. In view of the resilience afforded by the spring clips, the bumps, once inserted, act in a shoulder-like manner to resist subsequent retraction of the clips, and hence opening of the keepers. It will also be appreciated that the construction of the keepers - and especially of the spring clips - enables the aforedescribed opening and closing movements to be effected using a single-finger operation. Bearing in mind that access to internal components of computer assemblies can often be difficult, this single-finger facility has been found to offer many advantages over prior constructions.

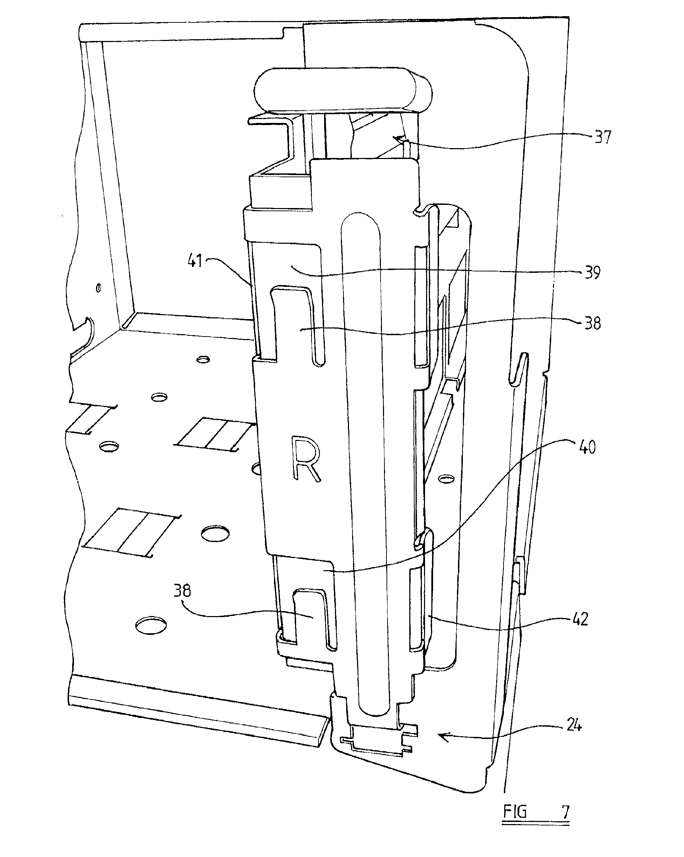

As shown in Figures 1, 6 and 7, each keeper is provided with a pair of leaf springs 38, formed integrally with the keeper body. Each leaf spring is biased slightly away from the body of the keeper, so as to bear upon - and urge - the HDD rails 16 and 17 when the keepers adopt their closed positions. As shown especially in Figures 6 and 7, each leaf spring 38 is provided with a somewhat rearwardly folded distal end, with the bearing surfaces defined thereby pressing, in use, against stop flanges 39 and 40 of the rails 16 and 17.

To ensure, in addition, that the HDD's are secured against lateral movement, the keepers are each provided with a number (in this case four) of transverse biasing elements 41 and 42 which, as shown especially in Figures 2 and 7, are effective to "clamp" the HDD rails firmly against the cage 10.

In this way, closure of the keepers ensures that the HDD rails - and hence the associated HDD's - are maintained firmly in position within the housing, thus reducing the possibility of any unwanted vibrations which, as is well known, can affect the operating effectiveness and lifetime of the vibration-sensitive HDD mechanisms.

As shown in Figures 6, 7 and 10, the keepers and HDD rails may be provided with appropriate indicia (e.g. L and R) to assist a user in assembling the various components in the correct manner. To this end, the outwardly facing stop flanges 39 and 40 may be marked L and R respectively, as may the outwardly facing surfaces of the keepers 21 and 22. Other indicia could also of course be used to achieve the same benefit.

Looking next at the structure of the HDD rails themselves, it will be noted that each rail is provided, generally mid-way along its length, with a somewhat L-shaped upstanding protrusion providing an engagement part 43. This engagement part is co-operable with a mutually configured retaining element 44 provided integrally with one of the webs 15 interconnecting the two guide channel runners 14. The face-to-face relationship adopted by the mutually co-operable engagement parts and retaining elements restricts movement of the HDD rails in the general direction A. This attachment facility enables HDD rails to be transported - in the absence of any associated HDD - in a secure manner, thus reducing the possibility of the rails becoming damaged or misplaced during transit from a manufacturer, for example.

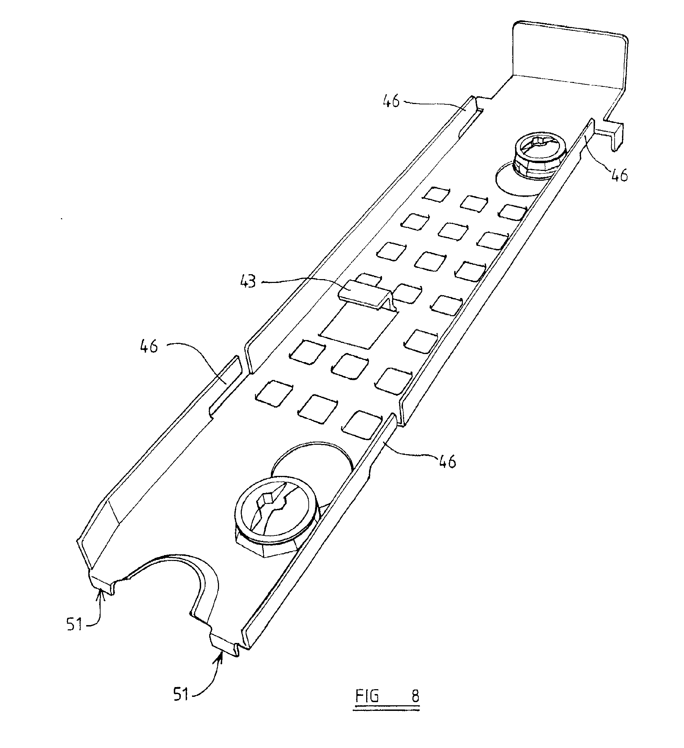

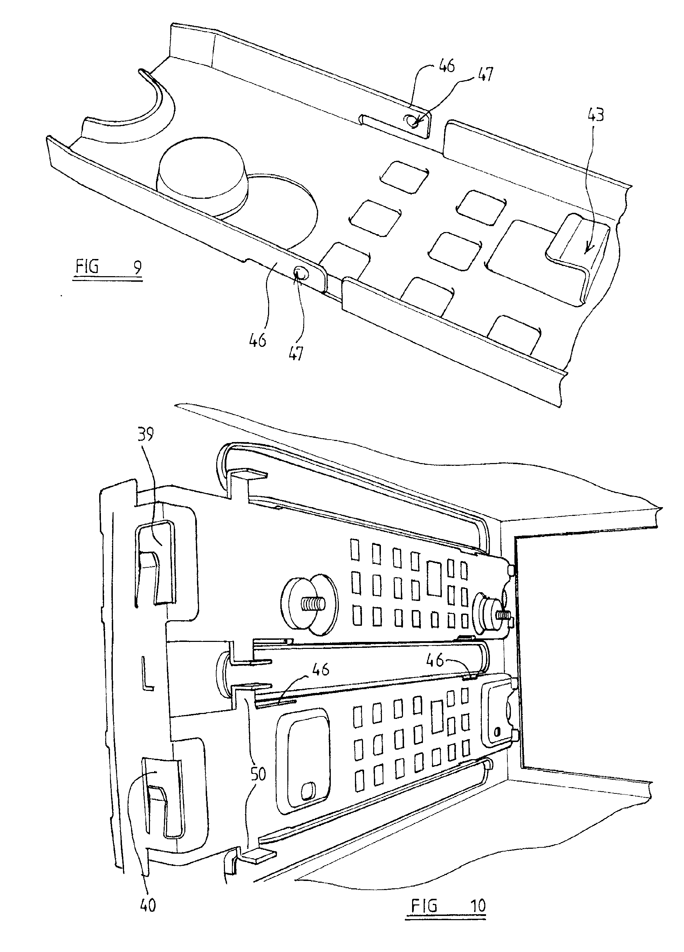

As the releasable keepers may not be provided by an OEM, it is also necessary to ensure that the rails 16 and 17 are restrained against outward sliding movement from the cage. To effect this, the rails (see Figures 8, 9 and 10) are each provided with four slightly outwardly biased leaf springs 46, each of which is provided at its distal end (see Figure 9) with an outwardly protruding bump 47 which, when the rail is introduced to an appropriate guide channel, bears upon the inwardly opposing faces of the runners 14, as shown especially in Figure 10. As will be appreciated, this locally increased width of the rail will augment the friction that exists between the rail and the guide channel, and thus make it more difficult for the rail to slide therealong, in either direction. To accentuate the effect, front and rear parts of the channels 13 may narrow slightly so that the initial and latter stages of insertion/withdrawal are made slightly more difficult. If desired, appropriately configured recesses may be provided in the opposing faces of the runners 14 so as to provide a tactile manner by which a user can identify a correct insertion position.

As shown in Figure 10, the provision of the four raised bumps 47, in conjunction with the associated leaf springs 46, means that the rails effectively are supported between the runners 14 of the channels 13 at four distinct points, each of which being somewhat resilient. This resilient "suspension" of the rail within the housing assists in mitigating the effects of any mechanical shocks or vibration to which the cage may be subjected, thus further assisting in protecting the delicate internal components of the associated HDD.

As shown in Figures 2, 3, 4 and 5 especially, the HDD rails are provided with a locator element in the form of a tab 48 which, when the rail is inserted correctly within the housing, enters into an appropriately configured slot 49 provided in the front wall 28 of the cage.

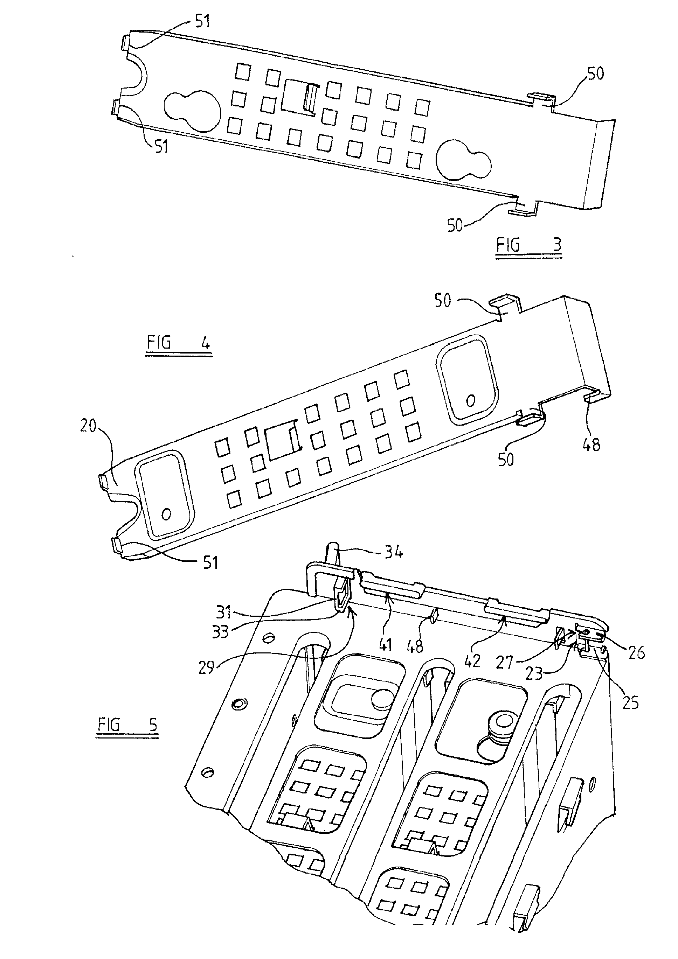

If the correct orientation of the rail is not adopted prior to insertion, the tab 48 will come into contact with the body of the wall 28, thus preventing complete insertion of the rail into the associated guide channel 13. Moreover, should a user inadvertently attempt to insert a "left-hand" rail (such as those shown on the left side of Figure 2) into a "right-hand" guide channel, this will be prevented by secondary locator elements 50 which, as shown in Figures 3, 4 and 10 especially, protrude generally transversely from the principal axes of the rails. As will be appreciated, these secondary locator elements, when the rails are inserted in the correct orientation, extend into the body of the cage 10, but would extend away from the body if the rails were to be inserted incorrectly. Under such circumstances, the secondary locator elements 50 would, subsequent to initial insertion of the rails, come into contact with the front wall 28 of the cage, thus preventing completion of the insertion process.

It will also be understood that the transversely protruding engaging part 43 of the HDD rails prevents the rails from being attached to a HDD in an incorrect orientation, as the presence of the protrusion between the body of the drive and the body of the rail makes it difficult - if not impossible - for the associated screws (which are relatively short) to be attached to the drive, through the rail. It should also be noted that each rail is provided, at its "rear" end, with a pair of inturned tabs 51 which provide a visual indication of the way in which the rail should be orientated, relative to the associated drive unit.

Lastly, returning to the configuration of the cage itself, it will be appreciated that the number - and size - of openings and gaps featured in the sides of the cage assist greatly from a cooling point of view, and also in reducing the possibility of any resonance being induced by operation of a drive unit, for example. The resonance reduction is further accentuated by the array of circular holes provided in the upper and lower sides of the HDD cage, with it having been found that the 5x2 array operates especially well in this respect. However, other configurations could of course be adopted. The bottom of the cage is also provided with a number (in this case four) of resiliently biased cable clips, which conveniently are formed by a pressing or stamping operation in the otherwise planar metal sheet from which the base is formed.

Overall, the invention, in its various aspects, provides many improvements in the field of computer sub-assembly housings and their associated components, not only from a technical point of view, but also from the viewpoint of ease of use and construction.

In the present specification "comprises" means "includes or consists of and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A housing for a computer sub-assembly having a releasable keeper operative to retain the sub-assembly in position within the housing.

2. A housing according to Claim 1 wherein the keeper is provided with a resilient biasing element operative to urge the sub-assembly towards the position.

3. A housing according to Claim 2 wherein at least two resilient biasing elements are provided, whereby the sub-assembly may be so urged in at least two different dimensions.

4. A housing assembly according to Claim 2 or Claim 3 wherein the keeper has a body and wherein the or each resilient biasing element is integral therewith.

5. A housing according to Claim 2, Claim 3 or Claim 4 wherein the or each resilient biasing element comprises a leaf spring.

6. A housing according to any one of Claims 2 to 5 wherein the or each resilient biasing element is adapted to bear against a sub-assembly support member.

7. A housing according to Claim 6 wherein the support member comprises a rail or tray.

8. A housing according to any one of the preceding claims wherein the keeper is mounted within the computer in a manner whereby angular movement of the keeper, relative to the housing, is permitted.

9. A housing according to Claim 8 wherein the keeper is mounted for pivotal movement relative to the housing.

10. A housing according to any one of the preceding claims wherein a distal part of the keeper is provided with a releasable attachment element co-operable with an attachment formation associated with the housing.

11. A housing according to Claim 10 wherein the releasable attachment element is resilient, deformation thereof being required to release the element from the attachment formation of the housing.

12. A housing according to Claim 10 or Claim 11 wherein the releasable attachment element comprises a protrusion adapted to co-operate with an aperture or recess provided within or as part of the housing.

13. A housing according to Claim 10, Claim 11 or Claim 12 wherein the releasable attachment element and the attachment formation are co-operable in a snap-fitting manner.

14. A housing according to any one of claims 10 to 13 wherein the releasable attachment element is integral with the body of the keeper.

15. A housing according to any one of the preceding claims wherein the keeper is provided with a release member such as a lever whereby a user may release the keeper from the housing.

16. A housing according to Claim 15 wherein the release member enables a user to release the keeper from the housing using a substantially single-finger operation.

17. A housing according to any one of the preceding claims wherein the keeper is a substantially one-piece component.

18. A housing for a computer sub-assembly having a keeper operative to retain the sub-assembly in position within the housing, the keeper being releasable, whereby it may be released from the sub-assembly using a substantially single-finger operation.

19. A housing according to Claim 18 further comprising one or more of the features of Claims 1 to 17.

20. A releasable keeper for use with a housing for a computer sub-assembly, the keeper being substantially in accordance with one or more of the features of Claims 1 to 19.

21. A housing for a computer sub-assembly having an attachment facility whereby a sub-assembly support member may be attached to the housing, in the absence of the sub-assembly itself.

22. A housing according to Claim 21 wherein the attachment facility comprises a retaining element co-operable with an engagement part of the support member.

23. A housing according to Claim 21 or Claim 22 wherein the retaining element comprises a projection attached to or integral with the housing.

24. A housing according to Claim 22 or Claim 23 wherein the engagement part is co-operable with the retaining element in a face-to-face manner, whereby movement of the support member away from the housing, in at least one direction, is hindered.

25. A housing according to Claim 22, Claim 23 or Claim 24 wherein the retaining element and the engagement part comprise mutually co-operable tabs.

26. A housing according to Claim 25 wherein the tabs are substantially L-shaped.

27. A housing according to any one of Claims 22 to 26 wherein the support member is slidably received within the housing, and wherein the retaining element and engagement parts are slidably co-operable.

28. A housing according to any one of the Claims 21 to 27 wherein the housing is provided with a guide channel for location of the support member, the guide channel narrowing towards at least one end thereof, whereby movement of the support member therealong is hindered.

29. A housing according to Claim 28 wherein the housing has a front side, through which the sub-assembly is introduced, and wherein the channel narrows towards said front side.

30. A housing according to Claim 28 or Claim 29 wherein the narrowing part provides a shoulder formation, the shoulder formation and/or support member being resiliently deformable, whereby the support member may be introduced to the channel in a substantially snap-fit manner.

31. A housing for a computer sub-assembly having a channel for location of a sub-assembly support member, the housing having an engagement element which, when the support member is inserted correctly into the housing, cooperates with a locator element on the support member, such co-operation not being possible when the support member is inserted incorrectly.

32. A housing according to Claim 31 wherein the engagement element comprises a recess or aperture and the locator element comprises a protrusion.

33. A housing according to Claim 32 wherein the engagement element comprises a slot and the locator element comprises a tongue.

34. A support member for a computer sub-assembly having an engagement part arranged so as to allow the support member to be attached through a computer sub-assembly housing in the absence of the sub-assembly itself.

35. A support member according to Claim 34 wherein the engagement part comprises a projection extending away from the support member, the projection being engageable with a co-operating retaining element associated with the housing.

36. A support member according to Claim 34 or Claim 35 wherein the engagement part is integral with the support member.

37. A support member according to Claim 35 or Claim 36 wherein the engagement part and retaining element are slidably engageable with each other.

38. A support member according to Claim 35, Claim 36 or Claim 37 wherein the engagement part and retaining element, when engaged, adopt a substantially face-to-face arrangement.

39. A support member according to any one of Claims 35 to 38 wherein the engagement part and retaining element comprise mutually co-operable tabs.

40. A support member according to Claim 39 wherein the tabs are generally L-shaped.

41. A support member according to any one of Claims 34 to 40 wherein the support member comprises a generally planar body and wherein the engagement part is upstanding therefrom.

42. A support member for use within a housing of a computer sub-assembly, the support member having a shock absorber which, in use, bears upon the housing, such that the magnitude of a shock to which the housing is subjected is reduced prior to it being transmitted to the sub-assembly to which the support member is attached.

43. A support member according to Claim 42 wherein the shock absorber is resiliently deformable.

44. A support member according to Claim 42 or Claim 43 wherein the shock absorber is integral with the support member.

45. A support member according to Claim 44 wherein the shock absorber comprises a leaf spring.

46. A support member according to Claim 45 wherein a distal end of the leaf spring is provided with a projecting contact which, in use, bears upon the housing.

47. A support member according to Claim 46 wherein the projection is engageable within a receiving formation provided in the housing.

48. A support member according to any one of Claims 42 to 47 wherein at least four shock absorbers are provided.

49. A housing for a computer sub-assembly and a support member for use therewith, a shock absorber being disposed between the housing and sub-assembly, whereby the magnitude of any shock to which the housing is subjected is reduced prior to it being transmitted to the sub-assembly.

50. A support member for use within a housing of a computer sub-assembly, the support member having a locator element which, when the support member is incorrectly introduced into the housing, abuts a stop element associated with the housing, thus preventing complete insertion of the support member.

51. A support member according to Claim 50 wherein the locator element comprises a projection and wherein the stop element is provided by a front part of the housing.

52. A support member according to Claim 50 or Claim 51 wherein the stop element is provided in a front face of the housing, and wherein an engagement element is provided, the engagement element being positioned and/or dimensioned so as to receive the locator element when the support member is correctly inserted, thereby allowing complete insertion of the support member.

53. A support member according to Claim 52 wherein the locator element comprises a tongue and wherein the engagement element comprises a slot.

54. A support member according to Claim 50, Claim 51, Claim 52 or Claim 53 wherein a secondary locator element is provided, the secondary locator element extending transversely of the longitudinal axis of the support member, so as to hinder insertion of a left-hand support member into a right hand guide channel, and vice versa.

55. A support member according to any one of Claims 34 to 48 or 50 to 54 wherein the support member comprises a drive unit rail or tray, and wherein the housing comprises a drive unit cage.

56. A housing according to any one of Claims 1 to 33 or Claim 49, the housing comprising a cage for a computer drive unit.
